(19) Europäisches Patentamt
European Patent Office
Office européen des brevets

(11) **EP 2 176 950 B1**

(12) **FASCICULE DE BREVET EUROPEEN**

(45) Date de publication et mention
de la délivrance du brevet:
**07.09.2011 Bulletin 2011/36**

(21) Numéro de dépôt: **08806170.0**

(22) Date de dépôt: **04.07.2008**

(51) Int Cl.:
***H03H 17/06*** *(2006.01)*  ***B60W 40/06*** *(2006.01)*
***B60W 40/12*** *(2006.01)*  ***B60W 50/06*** *(2006.01)*
***B60W 10/02*** *(2006.01)*

(86) Numéro de dépôt international:
**PCT/FR2008/051253**

(87) Numéro de publication internationale:
**WO 2009/010675 (22.01.2009 Gazette 2009/04)**

(54) **PROCEDE D'ASSISTANCE POUR UN VEHICULE**

FAHRZEUGUNTERSTÜTZUNGSVERFAHREN

VEHICLE ASSIST METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.07.2007 FR 0756318**

(43) Date de publication de la demande:
**21.04.2010 Bulletin 2010/16**

(73) Titulaire: **Renault s.a.s.**
**92100 Boulogne-Billancourt (FR)**

(72) Inventeurs:
• **DESFRICHES, Christophe**
**F-27120 Pacy-sur-eure (FR)**
• **MONTI, Alessandro**
**F-92250 La Garenne-colombes (FR)**
• **POTHIN, Richard**
**F-78760 Jouars-pontchartrain (FR)**

(74) Mandataire: **Alizon, Robert**
**Renault s.a.s.**
**TCR GRA 2 36**
**1, avenue du Golf**
**F-78288 Guyancourt Cedex (FR)**

(56) Documents cités:
**EP-A- 1 491 787    DE-A1- 10 138 203**
**FR-A- 2 854 848**

**Description**

La présente invention concerne un procédé d'assistance au contrôle pour un véhicule à boîte de vitesse manuelle ou automatique, mettant en oeuvre un algorithme d'apprentissage de la courbe d'embrayage.

L'invention concerne en particulier les dispositifs et procédés d'assistance aux manoeuvres en côte, mais peut également être appliquée à l'estimation de l'usure de l'embrayage d'un véhicule, ou encore au contrôle d'un système de commande électronique de la trajectoire (plus connu sous le nom de Electronic Traction Control, ETC) d'un véhicule 4x4.

Sur certains véhicules, les constructeurs automobiles proposent un Frein de Stationnement Assisté.

Ce Frein de Stationnement Assisté doit apporter une prestation valorisable par le client, en raison de son coût relativement élevé par rapport à la solution du Frein de Stationnement traditionnel.

Pour valoriser ce système, des constructeurs ont donc décidé d'y associer une fonction d'assistance aux manoeuvres en côte, et notamment d'assistance au démarrage en côte (ou décollage), dont le principe est de relâcher les freins sur les roues non motrices dès que le couple transmis par le moteur aux roues motrices est suffisant pour compenser l'effet de l'inclinaison de la pente.

On connaît déjà de tels dispositifs.

Le document GB 2 376 990 propose dans cette optique un module de commande d'un dispositif de Frein de Stationnement Assisté pour un véhicule automobile comportant une boîte de vitesse manuelle, qui relâche la force exercée sur le frein de stationnement lorsqu'il reçoit des signaux lui indiquant, d'une part, un déplacement positif de la pédale d'accélérateur, et d'autre part, que la position de la pédale d'embrayage a atteint son point de léchage. L'instant où le dispositif relâche le frein dépend également de la vitesse d'enfoncement de la pédale d'embrayage, du rapport de vitesses engagé et de la pente dans laquelle se trouve l'usager du véhicule.

Ce dispositif a l'inconvénient d'être sensible aux bruits des capteurs, tels que le capteur de pente. Par ailleurs, il ne tient compte que du point de léchage sur la courbe d'embrayage. Il ne permet donc pas un décollage optimal en forte pente.

Enfin, un autre inconvénient de ce procédé est qu'il se fonde sur un calcul du couple transmis par l'embrayage correspondant au point de léchage à partir d'une estimation du couple moteur. Il ne prend donc pas en compte le vieillissement de l'embrayage, et est sensible aux consommateurs en ligne, tels que la climatisation, l'alternateur ou tout autre appareil consommant une partie de l'énergie venant du moteur.

Le document FR 2 828 450 propose quant à lui un procédé d'assistance au démarrage en côte exploitant les caractéristiques de l'embrayage du véhicule, au moyen d'un algorithme qui permet d'estimer le couple transmis à cet embrayage, afin de contrôler de manière plus précise le desserrage des freins lors du décollage.

Cette estimation est réalisée en traçant une courbe d'embrayage, qui donne la position de la pédale d'embrayage et le couple maximal transmissible par l'embrayage correspondant. Elle est cependant très sensible à l'initialisation de ladite courbe ainsi qu'au bruit des capteurs. Par ailleurs, la mise à jour de la courbe est lente, et inadaptée à son degré de fiabilité.

Un objectif de l'invention est de proposer un procédé d'assistance, notamment aux manoeuvres en côte, qui soit insensible aux consommateurs en ligne.

Un autre objectif de l'invention est de proposer un procédé d'assistance, notamment aux manoeuvres en côte, qui se fonde sur une estimation de la courbe d'embrayage, et qui soit peu sensible à l'initialisation de ladite courbe d'embrayage.

Pour cela, l'invention propose un procédé d'assistance, caractérisé en ce qu'il met à jour une courbe d'embrayage, ladite courbe reliant la position de la pédale d'embrayage et un couple maximal transmissible par l'embrayage correspondant, en fonction de sa fiabilité, sa fiabilité étant moins importante en début d'utilisation du véhicule, et croissant avec l'usage dudit véhicule.

Certains aspects préférés mais non limitatifs du procédé selon l'invention sont les suivants :

- on fait varier, en fonction de la fiabilité de la courbe, au moins un des paramètres suivants :

  o un nombre de changements de rapport ascendants et/ou descendants pris en compte pour chaque plage de couple,
  o un écart seuil,
  o un seuil de glissement, ou
  o un facteur de fiabilité,

- on paramètre, en fonction de chaque plage de couple, le nombre de changements de rapport ascendants et/ou descendants, l'écart seuil, le seuil de glissement, et/ou le facteur de fiabilité pris en compte pour la plage de couple,
- la mise à jour de la courbe d'embrayage est réalisée en temps réel tout au long de la vie du véhicule,

- il met en oeuvre un dispositif d'assistance selon l'invention.

Enfin, selon un dernier aspect de l'invention, on propose la mise en oeuvre d'un procédé d'assistance selon l'invention sur un véhicule pour aider un usager du véhicule à effectuer des manoeuvres en côte, pour estimer l'usure de l'embrayage du véhicule, et/ou pour contrôler un système de contrôle électronique de la trajectoire d'un véhicule 4x4.

D'autres caractéristiques, buts et avantages de la présente invention apparaîtront à la lecture de la description détaillée qui va suivre, au regard des dessins annexés, donnés à titre d'exemples non limitatifs et sur lesquels :

- La figure 1 présente l'architecture fonctionnelle d'un véhicule équipé du dispositif selon l'invention,
- La figure 2 illustre le principe de fonctionnement de l'automate qui estime le couple transmis aux roues d'un véhicule mis en oeuvre dans l'invention,
- La figure 3 présente une discrétisation de la courbe d'embrayage selon l'invention.

Un véhicule équipé d'un dispositif d'assistance au démarrage en côte selon l'invention comprend un groupe motopropulseur, un Frein de Stationnement Assisté 5, un bus 4, sur lequel transitent des signaux provenant du reste du véhicule 6, et un calculateur de contrôle du groupe motopropulseur.

Le bus 4 est de préférence un bus de la norme CAN™ (Control Area Network, pour réseau de zone de commande).

Le groupe motopropulseur est composé d'un moteur thermique couplé à des roues motrices par un dispositif de transmission comportant une boîte de vitesse et un embrayage, commandés par l'usager ou un calculateur, selon le type de boîte de vitesse.

En variante, le groupe motopropulseur peut comporter une ou plusieurs machines électriques, avec ou sans moteur thermique.

Le dispositif d'assistance au démarrage en côte coopère avec un calculateur 1 de contrôle du Frein de Stationnement Assisté 5, qui est également connecté au bus 4.

Le calculateur 1 est équipé, ainsi qu'il est connu, d'un moyen pour produire des ordres de serrage et de desserrage du Frein de Stationnement Assisté 5, lesdits ordres 5 étant générés sur une ligne de connexion au Frein de Stationnement Assisté 5 proprement dit. Le cas échéant, le calculateur 1 est également équipé d'un moyen pour transmettre au bus 4 des informations d'état du Frein de Stationnement Assisté 5.

Le calculateur 1 de contrôle du Frein de Stationnement Assisté 5 est connecté par une ligne convenable à un capteur de pente 2.

Lorsque le véhicule se trouve arrêté dans une pente, le capteur de pente 2 délivre un signal représentatif de l'inclinaison de la pente dans laquelle est arrêté le véhicule.

Lorsque le calculateur 1 de contrôle du Frein de Stationnement Assisté 5 produit un ordre de serrage, les parties mobiles des freins viennent serrer les disques de sorte que le Frein de Stationnement Assisté 5 soit serré.

Inversement, lorsque le calculateur 1 de contrôle du Frein de Stationnement Assisté 5 produit un ordre de desserrage du Frein de Stationnement Assisté 5, les parties mobiles des freins sont relâchées.

Par ailleurs, en situation de démarrage (quelle que soit l'inclinaison de la pente), le groupe motopropulseur du véhicule produit un couple qui est ou non transmis aux roues, selon que l'embrayage est actif ou non, et selon une fraction qui dépend de la position de l'embrayage.

Ainsi, le dispositif de l'invention détermine une condition de desserrage du Frein de Stationnement Assisté 5, fonction notamment de l'inclinaison de la pente et de l'estimation du couple ECT transmis à l'embrayage. Cette condition est déterminée de sorte que le véhicule se trouve en situation de décollage dès qu'un certain seuil est dépassé, où l'effet de pente est équilibré par le couple moteur.

Pour décoller, un véhicule stationné dans une pente doit vaincre l'effet de pente, dû à la force d'attraction de la terre.

Cet effet est fonction de l'inclinaison de la pente et de la masse du véhicule, et vaut

$$m.g.sin(\theta_{pente}) \qquad \textbf{(EQUATION 1)}$$

où

- $m$ est la masse du véhicule,
- $g$ est la gravité,
- $\theta_{pente}$ est l'inclinaison de la pente.

Le couple minimum C$_{T\_seuil}$ qu'il faut transmettre à l'embrayage, par l'intermédiaire de la chaîne cinématique de la roue, pour permettre au véhicule de décoller (c'est-à-dire de démarrer dans la pente), doit donc être au moins égal à

$$C_{T\_seuil} = ECT(\theta_{emb\_seuil}) = m.g.sin(\theta_{pente}).r(b).\rho_{roues} \qquad \text{(EQUATION 2)}$$

où

- $r(b)$ est le rapport de boîte engagé, correspondant à la position b du levier de vitesse,
- $ECT(\theta_{emb-seuil})$ est le couple transmis par l'embrayage lorsque la pédale est enfoncée jusqu'à la position $\theta_{emb\_Seuil}$,
- $\rho_{roues}$ est le rayon sous charge des roues du véhicule.

Le couple C$_{T\_seuil}$ est en fait le couple seuil de décollage.

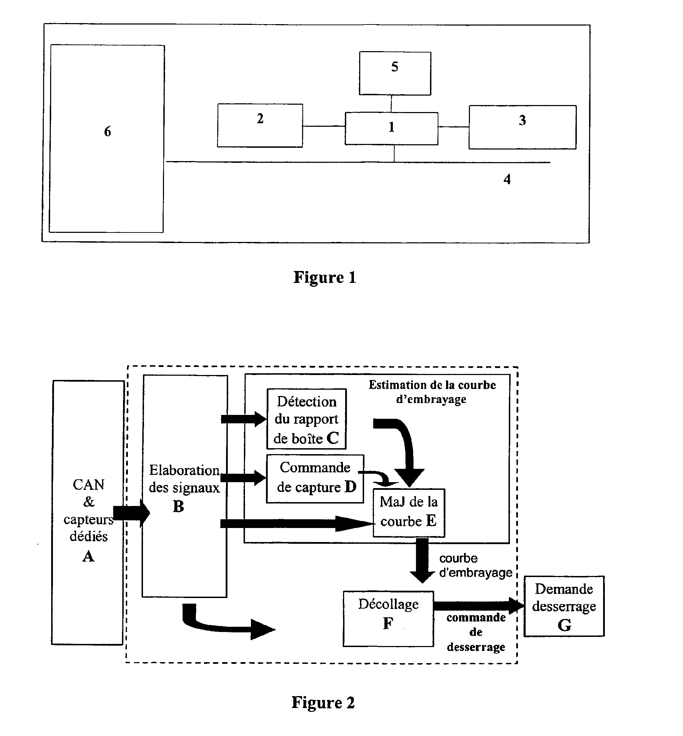

La stratégie que propose l'invention est fondée sur l'amélioration de l'algorithme présenté par la demande FR 2 828 450, qui propose un dispositif permettant d'estimer la courbe d'embrayage (qui, rappelons-le, relie la position de la pédale d'embrayage au couple maximal appliqué par l'embrayage), de sorte que le dispositif soit moins sensible à l'usure et au vieillissement de l'embrayage ainsi qu'aux consommateurs en ligne que les procédés se fondant sur son calcul. Cet algorithme est illustré sur la figure 2 annexée et ne sera pas davantage décrit. Le procédé associé commande le relâchement du Frein de Stationnement Assisté lorsque le couple transmis à l'embrayage ECT est supérieur au couple de décollage C$_{T\_seuil}$ donné par l'équation 2.

La difficulté consiste à estimer le plus précisément possible le couple transmis à l'embrayage.

Pour cela, l'algorithme et le procédé proposés par notre invention améliorent les blocs B et E de la figure 2, à savoir les blocs d'élaboration des signaux d'entrée et de mise à jour de la courbe d'embrayage.

On définit sur la courbe d'embrayage le point de léchage comme correspondant à la position de la pédale pour laquelle l'embrayage commence à transmettre un couple. Ce couple minimum peut par exemple être de l'ordre de 3N.m.

Le point de léchage correspond donc à une position de la pédale d'embrayage pour laquelle l'embrayage est en phase de glissement.

Cette caractéristique évolue avec le temps, en fonction de l'usure de la garniture du plateau de friction de l'embrayage et du volant d'inertie du véhicule, du changement de la raideur des ressorts qui appliquent une pression sur l'embrayage suite à leur utilisation répétée, etc.

Le couple transmis par l'embrayage est donc déterminé à partir de la connaissance a priori de la courbe d'embrayage. Pour cela, on doit déterminer la position de la pédale d'embrayage pour laquelle on transmet le couple seuil de décollage C$_{T\_seuil}$ en résolvant l'équation 2. On en déduit alors la position $\theta_{emb\_seuil}$ que doit prendre la pédale d'embrayage afin d'effectuer un démarrage en côte de qualité.

La courbe d'embrayage étant sensible à l'usure et au vieillissement de l'embrayage, il faut la recaler tout au long de la vie du véhicule.

Dans la suite de la description et sur les figures annexées, nous utiliserons les notations suivantes pour identifier les variables mathématiques entrant en jeu dans l'invention :

- C$_{m\_CME}$ est le couple moyen effectif délivré par le moteur, estimé par le calculateur moteur,
- $\omega_m$ est la vitesse angulaire de rotation du moteur,
- $\omega_R$ est la vitesse angulaire de rotation des roues avant,
- v est la vitesse longitudinale du véhicule,
- $\theta_{emb}$ est la position de la pédale d'embrayage,
- $\theta_{acc}$ est la position de la pédale d'accélérateur,
- $\theta_{pente}$ est l'inclinaison du véhicule,
- RE est le rapport de vitesse engagé. RE = 0 au point mort, et RE = 1 quelle que soit la vitesse engagée, excepté pour la marche arrière, pour laquelle RE = -1,
- $\dot{x}$ est la dérivée de la variable x par rapport au temps.

Selon l'invention, la courbe d'embrayage est estimée à partir de points acquis lors des phases de changement de rapport de vitesse du véhicule, de préférence au cours des changements de rapport descendants. En effet, lors des changements de rapport descendants, le calculateur moteur du véhicule délivre une meilleure estimation du couple moteur C$_{m\_CME}$, puisqu'il ne doit tenir compte que de l'effet dû à la descente des pistons lorsque ceux-ci sont en phase d'aspiration d'air, tandis que lors de changements de rapport ascendants, le calculateur moteur doit tenir compte de la température de combustion du mélange, de la quantité d'essence effectivement injectée, etc. ce qui rend beaucoup plus complexe et moins sûre l'estimation du couple moteur C$_{m\_CME}$.

Amélioration du bloc d'élaboration des signaux délivrés par les capteurs du véhicule :

Les équations de la dynamique sur lesquelles est basé le procédé de l'invention sont :

$$m\dot{v} = F_X - F_{res}$$
$$J_R \cdot \dot{\omega}_R = C_R(\theta_{emb}, \omega_m - \omega_R) - \rho_{roues} \cdot F_X \qquad \text{EQUATION 3}$$
$$J_m \cdot \dot{\omega}_m = C_{m\_CME}(\omega_m, \theta_{acc}) - r(b) \cdot C_R(\theta_{emb}, \omega_m - \omega_R)$$

C'est-à-dire :

$$F_X = m \cdot \dot{v} + F_{res}$$
$$C_R(\theta_{emb}, \omega_m - \omega_R) = J_R \cdot \dot{\omega}_R - \rho_{roues} \cdot F_X \qquad \text{EQUATION 4}$$
$$C_{m\_CME}(\omega_m, \theta_{acc}) = J_m \cdot \dot{\omega}_m + r(b) \cdot C_R(\theta_{emb}, \omega_m - \omega_R)$$

où

- $r(b).C_R(\theta p_{ente}, \omega_m-\omega_R)$ est le couple transmis par l'embrayage à la position $\theta_{emb}$, que l'on notera $ECT(\theta_{emb})$
- $F_X$ est la composante longitudinale de la force de contact entre la roue du véhicule et le sol,
- $F_{res}$ est la composante longitudinale de la résistance au mouvement du véhicule.

Lorsque le glissement est suffisant, on peut utiliser l'équation 4 afin d'estimer la courbe d'embrayage. On obtient alors les équations :

$$ECT(\theta_{emb}) = Cm_{CME} - J_m\dot{\omega}_m$$
$$\omega_R - r(b) \cdot \omega_m > \Delta\omega_{seuil} \qquad \text{EQUATION 5}$$

La seconde équation est une condition sur le glissement. Elle exprime que la différence entre la vitesse angulaire des roues $\omega_R$ et la vitesse angulaire de l'embrayage $r(b).\omega_m$ doit être supérieure à une vitesse angulaire seuil $\Delta\omega_{seuil}$, afin de garantir que le couple transmis par l'embrayage soit le couple maximal transmissible par l'embrayage à la position $\theta_{emb}$ considérée.

Pour estimer la courbe d'embrayage, comme peut le montrer l'équation 5, il faut que les variables $C_{m\_CME}$, $\theta_{emb}$, $\omega_m$, $\omega_R$ et $\dot{\omega}_m$ soient en phase.

On applique donc des filtrages, et/ou des dérivations et/ou des retards aux signaux reçus en entrée du bloc B, lesdits signaux provenant des différents capteurs du véhicule par l'intermédiaire du bus CAN, afin que les signaux en sortie du bloc B soient en phase.

Les capteurs peuvent par exemple être un capteur de pente, un capteur d'embrayage, un capteur de vitesse de rotation angulaire du moteur, etc.

Pour cela, le dispositif de la demande met en oeuvre des filtres FIR (pour Finite Impulse Response, Réponse finie aux impulsions). Lorsqu'il reçoit un signal d'entrée venant d'un capteur, il introduit un retard dans ledit signal, dont le rôle est de réduire le bruit du capteur correspondant, de manière connue en soi. Le signal de sortie y(t) d'un filtre FIR pour un signal d'entrée x(t) est donc :

$$y(t) = \sum_{i=1}^{N} a_i \cdot x(t - i \cdot T) \qquad \text{EQUATION 6}$$

où

- $a_i$ est le $i^{ème}$ coefficient du filtre FIR,
- N est le nombre total de coefficients du filtre FIR,
- $x(t$-$i\ T)$ est le signal d'entrée du filtre retardé de iT secondes.

Le dispositif selon l'invention peut en outre comporter des filtres de dérivation sur m échantillons, qui introduisent un retard également connu en soi (du type m/2).

Par exemple, de tels filtres peuvent être réalisés selon l'équation suivante :

$$y(t) = \frac{\sum_{k=1}^{m} x(k) - x(k-m)}{m \cdot Ts} \qquad\qquad \text{EQUATION 7}$$

où

- $Ts$ est le temps d'échantillonnage.

On peut également introduire des retards constants, afin de pallier les retards dus par exemple aux opérations de filtrage, de dérivation (notamment au cours de l'opération selon laquelle on dérive $\omega_m$ afin d'obtenir $\dot{\omega}_m$) ou à des pas d'échantillonnage différents sur le bus CAN. On exprime alors le signal de sortie y(t) comme ayant un retard constant par rapport à un signal d'entrée x(t) tel que

$$y(t) = x(t - T) \qquad\qquad \text{EQUATION 8}$$

où

- $x(t$-$T)$ est le signal d'entrée retardé de T secondes

Enfin, des retards variables peuvent être introduits, ces retards étant liés aux caractéristiques de certains capteurs.

Par exemple, le capteur de vitesse du moteur délivre une information sur la vitesse de rotation du moteur en tours par minute : selon la vitesse de rotation du moteur, l'information est donc délivrée plus ou moins fréquemment, puisqu'elle est obtenue au moment où le moteur effectue un tour complet. Ainsi, les autres signaux, tels que l'estimation du couple moteur $C_{m\_CME}$, doivent être mis en phase avec l'instant de délivrance de ce signal moteur $\omega_m$. On exprime alors le signal de sortie y(t) comme ayant un retard variable par rapport à un signal d'entrée x(t) tel que :

$$y(t) = \begin{cases} x(t) & si & \omega_m^0 \leq \omega_m(t) < \omega_m^1 \\ x(t-T) & si & \omega_m^1 \leq \omega_m(t) < \omega_m^2 \\ ... & si & ... \\ x(t-(i-1)\cdot T) & si & \omega_m^{i-1} \leq \omega_m(t) < \omega_m^i \\ x(t-i\cdot T) & si & \omega_m(t) \geq \omega_m^i \end{cases} \qquad \text{EQUATION 9}$$

où

- $\omega_m^i$ est le $i^{ème}$ seuil de vitesse angulaire du moteur du moteur ,
- $x(t$-$iT)$ est le signal d'entrée retardé de i.T secondes

L'utilisation de ces filtres sur les signaux d'entrée permet donc d'augmenter la robustesse aux bruits des capteurs de l'algorithme utilisé par le dispositif de la demande, en tenant compte des retards dus à l'utilisation de certains paramètres lors de l'estimation de la courbe d'embrayage.

Amélioration de la mise à jour de la courbe d'embrayage

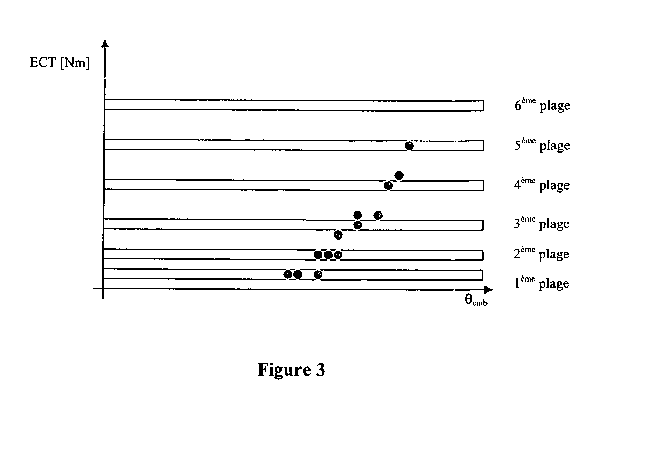

Afin d'obtenir la courbe d'embrayage, des points CC($\theta_{emb\_CC}$, $ECT_{CC}$) liant la position de la pédale d'embrayage $\theta_{emb}$ et le couple maximal transmissible par l'embrayage ECT sont mesurés puis enregistrés. La courbe d'embrayage est alors discrétisée en $N_{plages}$ plages de couple ECT, comme illustré sur la figure 3 annexée, chaque plage i ($1 \leq i \leq N_{plages}$) étant associée à un point $CC_i(\theta_{emb\_CC}(i)$, $ECT_{CC}(i))$.

De préférence, les plages i ($1 \leq i \leq N_{plages}$) sont des intervalles réguliers, encadrés par les couples transmis par l'embrayage $ECT_{Min}(i)$ et $ECT_{Max}(i)$, avec $ECT_{Max}(i) = ECT_{Min}(i+1)$ ( pour $1 \leq i \leq N_{plages} - 1$).

Toute autre discrétisation peut être envisagée, voir par exemple la figure 3. Néanmoins, une discrétisation plus fine pour les petites valeurs de ECT est préférable afin d'avoir une courbe d'embrayage plus précise aux alentours du point de léchage.

De préférence, les signaux pris en compte pour l'élaboration de la courbe d'embrayage sont les signaux obtenus en sortie du bloc B, à savoir des signaux filtrés pour les rendre robustes aux bruits des capteurs, et/ou retardés afin de les mettre en phase.

L'algorithme et le procédé selon l'invention suivent les étapes suivantes :

Au cours d'une première étape, si un changement de rapport de vitesse est détecté, une commande de mémorisation de points ($\tilde{\theta}_{emb}$, $E\tilde{C}T$, $\tilde{\omega}_R$, $\tilde{\omega}_m$) est générée, afin que les informations de position de pédale d'embrayage $\theta_{emb}$, de vitesse de rotation du moteur $\omega_m$, de vitesse de rotation des roues $\omega_R$ et de couple transmis par l'embrayage ECT soient mises en mémoire dans un moyen d'enregistrement. Lors d'un rétrogradage, une multitude de points ($\tilde{\theta}_{emb}$, $E\tilde{C}T$, $\tilde{\omega}_R$, $\tilde{\omega}_m$) est ainsi capturée.

Au cours d'une deuxième étape, le procédé détermine si un rapport de vitesse a été engagé, et le cas échéant, si le changement de rapport est descendant. Si cette condition n'est pas remplie, le procédé ne tient pas compte des points capturés et le rejette. Sinon, il passe à une troisième étape au cours de laquelle il analyse les points capturés.

Bien entendu, comme nous l'avons vu plus haut, la condition de rétrogradage est une restriction qui n'est choisie que pour augmenter la robustesse de l'algorithme associé au procédé. Si l'estimation du couple moteur est jugée suffisamment fiable, cette restriction peut être annulée, de manière à prendre également en compte les points mémorisés lors d'un changement de vitesse montant.

Lors de l'analyse des points capturés ($\tilde{\theta}_{emb}$, $E\tilde{C}T$, $\tilde{\omega}_R$, $\tilde{\omega}_m$), au cours de la troisième étape, le procédé établit, pour chacun d'entre eux, s'il appartient à une plage i de la courbe d'embrayage. Le cas échéant, le point est alors mis en mémoire. Sinon, le point est rejeté.

En notant :

- $\tilde{x}$ l'information capturée pour la variable x,
- $\bar{x}$ la moyenne effectuée sur la variable x,
- $\tilde{P}_{i,j}$ ($\theta_{emb}(i)$, $ECT(i)$) le $j^{eme}$ point capturé au cours d'un réembrayage dans la $i^{eme}$ plage de la courbe d'embrayage,

les conditions que doit satisfaire un tel point ($\tilde{\theta}_{emb}$, $E\tilde{C}T$, $\tilde{\omega}_R$, $\tilde{\omega}_m$) pour être mis en mémoire par le dispositif sont les suivantes :

- le point doit appartenir à la plage i : $ECT_{Min}(i) < E\tilde{C}T < ECT_{Max}(i)$
- le glissement doit être supérieur à un seuil donné $\Delta\omega_{seuil}$ : $\Delta\omega = \tilde{\omega}_R - \tilde{\omega}_m \cdot r(b) > \Delta\omega_{seuil}$
- l'écart entre le point capturé et le point de la courbe d'embrayage à mettre à jour dans la plage i ($\theta_{emb\_CC}(i)$) doit être faible, par exemple inférieur à un seuil $\Delta\theta_{emb}$ : $|\tilde{\theta}_{emb} - \theta_{emb\_CC}(i)| < \Delta\theta_{emb}$.

Au cours d'une quatrième étape, exécutée tous les $n_{re\_emb}$ rétrogradages, on moyenne les $n_i$ points d'une plage i acquis et mis en mémoire, pour chaque plage (c'est-à-dire pour i compris entre 1 et $N_{plages}$), afin de filtrer les erreurs dues à la modélisation et à la capture des mesures :

$$\overline{P}_i = \frac{\sum_j \tilde{P}_{i,j}}{n_i}$$

où $\bullet$ $\overline{P}_i = \overline{P}_i$ ($\overline{\theta}_{emb}(i)$, $E\overline{C}T(i)$) est la moyenne des points capturés dans la $i^{eme}$ plage de la courbe d'embrayage.

Ainsi, la courbe d'embrayage est-elle déterminée suite à la capture et au moyennage d'un ensemble de points obtenus au cours d'un nombre $n_{re-emb}$ de rétrogradages (voire au cours d'un nombre $n_{re-emb}$ de changements de rapport ascendants et/ou descendants).

Les trois premières étapes sont exécutées à tous les rétrogradages (voire à tous les changements de rapport ascendants et/ou descendants), tandis que la quatrième et la cinquième étape (voir ci-après) ne sont exécutées que tous les $n_{re\_emb}$ rétrogradages (voire tous les $n_{re\_emb}$ changements de vitesse ascendants et/ou descendants)

Par ailleurs, le nombre de rétrogradages $n_{re-emb}$ pris en compte ainsi que l'erreur $\Delta\theta_{emb}$ entre le point capturé $\bar{\theta}_{emb}$ et le point $\tilde{\theta}_{emb}$ de la courbe d'embrayage peut varier en fonction de la fiabilité de la courbe d'embrayage. Ainsi, pour augmenter la robustesse de l'algorithme et le procédé selon l'invention, peut-on faire varier ces deux paramètres au cours de la vie du véhicule (et de son usage).

Par exemple, au début de la vie du véhicule lorsque le véhicule a été peu utilisé, où la courbe d'embrayage est moins fiable, à savoir lors des premiers rétrogradages effectués sur le véhicule ou lors des premiers kilomètres parcourus par le véhicule, on peut fixer la valeur du nombre de rétrogradages $n_{re\_emb}$ pris en compte dans le moyennage et la valeur du seuil d'erreur $\Delta\theta_{emb}$, pour une plage i donnée, à une valeur élevée, de sorte que tous les points capturés soient acceptés et que l'erreur due aux mesures et à la modélisation soit finement filtrée au cours du procédé. Ce paramétrage permet ainsi d'améliorer sensiblement l'initialisation de la courbe d'embrayage.

Par la suite, au cours de l'utilisation du véhicule, on peut alors réduire la valeur attribuée à ces deux paramètres, puisque la courbe d'embrayage obtenue et mise en mémoire selon l'invention tend à converger vers la courbe d'embrayage réelle.

Enfin, au cours d'une cinquième étape, le procédé détermine la mise à jour de la courbe d'embrayage qui, de préférence, est réalisée au moyen d'un filtre passe-bas du premier ordre, appliqué à chacune des plages de couple (1 $\leq i \leq N_{plages}$) tous les $n_{re-emb}$ rétrogradages :

$$CC_i(k) = \alpha_{emb\_courbe} \cdot CC_i(k-1) + (1 - \alpha_{emb\_courbe}) \cdot \overline{P}_i(k) \qquad \text{EQUATION 10}$$

où

- $\alpha_{emb\_courbe}$ est un facteur de fiabilité,
- $k$ indique le pas de calcul (tous les $n_{re-emb}$ rétrogradages).

Ainsi, $CC_i(k)$ est le point de la courbe d'embrayage dans la plage de couple i, au pas de calcul k (c'est-à-dire après $k*n_{re-emb}$ rétrogradages).

$CC_i(k-1)$ est le point de la courbe d'embrayage dans la plage de couple i, au pas de calcul (k-1) (c'est-à-dire après $(k-1)*n_{re-emb}$ rétrogradages).

$\overline{P}_i(k)$ est la moyenne des points capturés entre les $k*n_{re\_emb}$ rétrogradages et les $(k-1)*n_{re-emb}$ rétrogradages.

On attribue une valeur comprise entre 0 et 1 au coefficient de fiabilité $\alpha_{emb\_courbe}$ en fonction de la fiabilité de la courbe d'embrayage.

Ainsi, pour une courbe fiable, le coefficient de fiabilité $\alpha_{emb\_courbe}$ sera plus proche de 1 que pour une courbe d'embrayage peu fiable, pour laquelle le coefficient de fiabilité sera proche de zéro.

Ce paramètre $\alpha_{emb\_courbe}$ est par ailleurs paramétrable, et peut, tout comme la valeur du nombre de ré-embrayages $n_{re\_emb}$ pris en compte dans le moyennage et la valeur du seuil d'erreur $\Delta\theta_{emb}$, varier au cours de la vie du véhicule afin que la courbe obtenue par l'algorithme selon l'invention converge plus rapidement vers la courbe d'embrayage réelle.

Par exemple, lors des premiers rétrogradages ou lors des premiers kilomètres parcourus par le véhicule, la valeur de $\alpha_{emb\_courbe}$ peut être choisie faible (proche de zéro) puis augmentée progressivement par la suite. Le poids du point dernièrement enregistré $CC_i(k-1)$ sera donc moins important par rapport au poids du point moyenne $\overline{P}_i(k)$ pour la valeur attribuée au point $CC_i(k)$.

On garantit ainsi la mise à jour et l'apprentissage de la courbe d'embrayage du véhicule en temps réel, tout au long de sa vie.

**Revendications**

**1.** Procédé d'assistance au contrôle pour un véhicule comportant un groupe motopropulseur connecté aux roues motrices au moyen d'un embrayage,
**caractérisé en ce qu'**il met à jour une courbe d'embrayage, ladite courbe reliant la position de la pédale d'embrayage et un couple maximal transmissible par l'embrayage correspondant, en fonction de sa fiabilité, sa fiabilité étant moins importante en début d'utilisation du véhicule, et croissant avec l'usage dudit véhicule.

**2.** Procédé d'assistance selon la revendication 1, **caractérisé en ce qu'**on fait varier, en fonction de la fiabilité de la courbe, au moins un des paramètres suivants :

- un nombre de changements de rapport ascendants et/ou descendants ($n_{re\_emb}$) pris en compte pour chaque plage de couple,
- un écart seuil ($\Delta\theta_{emb}$),
- un seuil de glissement ($\Delta\omega_{seuil}$), ou
- un facteur de fiabilité ($\alpha_{emb\_courbe}$).

**3.** Procédé d'assistance selon la revendication 2, **caractérisé en ce qu'**on paramètre, en fonction de chaque plage de couple, le nombre de changements de rapport ascendants et/ou descendants ($n_{emb\_courbe}$), l'écart seuil ($\Delta\theta_{emb}$), le seuil de glissement ($\Delta\omega_{seuil}$), et/ou le facteur de fiabilité ($\alpha_{emb\_courbe}$) pris en compte pour la plage de couple.

**4.** Procédé d'assistance selon l'une des revendications 1 à 3, **caractérisé en ce que** la mise à jour de la courbe d'embrayage est réalisée en temps réel tout au long de la vie du véhicule.

**5.** Procédé d'assistance selon l'une des revendications 1 à 4, **caractérisé en ce qu'**il est appliqué sur un véhicule pour aider un usager du véhicule à effectuer des manoeuvres en côte, pour estimer l'usure de l'embrayage du véhicule, et/ou pour contrôler un système de commande électronique de la trajectoire d'un véhicule 4x4.

**Claims**

**1.** Control assistance method for a vehicle comprising a power train connected to the drive wheels by means of a clutch, **characterized in that** it updates a clutch curve, said curve linking the position of the clutch pedal and a maximum torque that can be transmitted by the corresponding clutch, according to its reliability, its reliability being less high at the start of use of the vehicle, and increasing with the use of said vehicle.

**2.** Assistance method according to Claim 1, **characterized in that** at least one of the following parameters is varied according to the reliability of the curve:

- a number of up and/or down shifts ($n_{re\_clu}$) taken into account for each torque range,
- a threshold deviation ($\Delta\theta_{clu}$),
- a slip threshold ($\Delta\omega_{threshold}$), or
- a reliability factor ($\alpha_{clu\_curve}$).

**3.** Assistance method according to Claim 2, **characterized in that** the following are parameterized according to each torque range: the number of up and/or down shifts ($n_{clu\_curve}$), the threshold deviation ($\Delta\theta_{clu}$), the slip threshold ($\Delta\omega_{threshold}$), and/or the reliability factor ($\alpha_{clu\_curve}$) taken into account for the torque range.

**4.** Assistance method according to one of Claims 1 to 3, **characterized in that** the updating of the clutch curve is done in real time throughout the life of the vehicle.

**5.** Assistance method according to one of Claims 1 to 4, **characterized in that** it is applied for a vehicle to assist a user of the vehicle in performing hill manoeuvres, to estimate the wear of the clutch of the vehicle, and/or to monitor an electronic system for controlling the trajectory of a 4x4 vehicle.

**Patentansprüche**

**1.** Unterstützungsverfahren zum Steuern eines Fahrzeugs, das ein Antriebsaggregat aufweist, das mit den Antriebsrädern mittels einer Kupplung verbunden ist, **dadurch gekennzeichnet, dass** es eine Kupplungskurve aktualisiert, wobei die Kurve die Position des Kupplungspedals und ein entsprechendes maximales von der Kupplung übertragbares Moment verbindet, in Abhängigkeit von ihrer Zuverlässigkeit, wobei die Zuverlässigkeit zu Beginn der Nutzung des Fahrzeugs weniger wichtig ist und im Laufe der Nutzung des Fahrzeugs zunimmt.

2. Unterstützungsverfahren nach Anspruch 1, **dadurch gekennzeichnet, dass** man in Abhängigkeit von der Zuverlässigkeit der Kurve mindestens einen der folgenden Parameter variieren lässt:

- eine Anzahl Aufwärts- und/oder Abwärtsgangwechsel ($n_{re\_Kupp}$), die für jeden Momentbereich berücksichtigt wird,
- einen Schwellenunterschied ($\Delta\theta_{Kupp}$),
- einen Schlupfschwellenwert ($\Delta\omega_{Shwell}$) oder
- einen Zuverlässigkeitsfaktor ($\alpha_{Kupp\_Kurve}$).

3. Unterstützungsverfahren nach Anspruch 2, **dadurch gekennzeichnet, dass** man in Abhängigkeit von jedem Momentbereich die Anzahl Aufwärts- und/oder Abwärtsgangwechsel ($n_{Kupp\_Kurve}$) parametriert, wobei der Schwellenunterschied ($\Delta\theta_{Kupp}$), d er Schlupfschwellenwert ($\Delta\omega_{Schwell}$) und/oder der Zuverlässigkeitsfaktor ($\alpha_{Kupp\_Kurve}$) für den Momentbereich berücksichtigt wird.

4. Unterstützungsverfahren nach einem der Ansprüche 1 bis 3, **dadurch gekennzeichnet, dass** die Aktualisierung der Kupplungskurve in Echtzeit während der ganzen Lebensdauer des Fahrzeugs ausgeführt wird.

5. Unterstützungsverfahren nach einem der Ansprüche 1 bis 4, **dadurch gekennzeichnet, dass** es auf ein Fahrzeug angewandt wird, um einem Benutzer des Fahrzeugs das Ausführen von Manövern auf einer Steigung zu erleichtern, um die Abnutzung der Kupplung des Fahrzeugs zu schätzen und/oder um ein elektronisches System zum Steuern der Bahn eines Allradfahrzeugs zu steuern.

**Figure 1**

**Figure 2**

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2376990 A

- FR 2828450